# EUROPÄISCHE PATENTANMELDUNG

(11) **EP 4 813 726 A1**
(43) Veröffentlichungstag der Anmeldung: **30.09.2026**
(21) Anmeldenummer: 26166079.9
(22) Anmeldetag: 19.03.2026
(51) Int. Cl.: B60L 15/20, B60L 1/00, B60L 50/60, B60L 50/75, B60L 58/10, B60L 58/40, H01M 10/42

(54) **STEUEREINRICHTUNG FÜR EINE ANTRIEBSVORRICHTUNG**

(30) Priorität: 24.03.2025 DE 102025111193
(71) Anmelder: ZF Friedrichshafen AG, 88046 Friedrichshafen (DE)
(72) Erfinder: Madlener, Matthias, 88367 Hohentengen (DE); Rothmund, Andreas, 88367 Hohentengen (DE); Glöckner, Rico, 94060 Pocking (DE)
(74) Vertreter: ZF Friedrichshafen AG

(57) **Zusammenfassung**

Eine Steuereinrichtung ist für eine Antriebsvorrichtung vorgesehen. Die Antriebsvorrichtung weist eine Energiespeichereinrichtung (11) und eine Antriebseinheit mit einem Traktionsmotor (21) und einem Arbeitsmotor (22) auf. Der Traktionsmotor (21) und der Arbeitsmotor (22) sind jeweils zumindest über eines von einem Laden und einem Entladen der Energiespeichereinrichtung (11) betreibbar. Die Steuereinrichtung weist eine Antriebsteuereinheit (41) mit einer Antriebschnittstelle auf, die dazu ausgestaltet ist, zumindest einen Antriebladeparameter (A_{Lade}) und einen Antriebentladeparameter (A_{Entlade}) zu empfangen. Die Antriebsteuereinheit (41) ist dazu ausgestaltet, den Traktionsmotor (21) und den Arbeitsmotor (22) zumindest unter Berücksichtigung des Antriebladeparameters (A_{Lade}) und des Antriebentladeparameters (A_{Entlade}) zu steuern.

## Beschreibung

### Technisches Gebiet

Die vorliegende Erfindung bezieht sich auf eine Steuereinrichtung für eine Antriebsvorrichtung, auf eine Antriebsvorrichtung für eine Arbeitsmaschine, ein Verfahren zum Steuern der Antriebsvorrichtung und eine Arbeitsmaschine mit einer Antriebsvorrichtung.

### Stand der Technik

Steuereinrichtungen für Antriebsvorrichtungen für Arbeitsmaschinen sind bekannt. Mit der zunehmenden Komplexität von Arbeitsmaschinen nehmen die steuerbaren Komponenten und Parameter zu. Eine Steuereinheit, die die Antriebsvorrichtung effizient steuern kann, ist vorteilhaft.

### Darstellung der Erfindung

Es ist eine Aufgabe der vorliegenden Erfindung, eine verbesserte Steuereinrichtung bereitzustellen, die eine effiziente Steuerung einer Antriebsvorrichtung ermöglicht und vielseitig einsetzbar ist.

Die Aufgabe wird von einer Steuereinrichtung gelöst, die die Merkmale des Anspruchs 1 aufweist. Vorteilhafte Weiterbildungen sind Gegenstand der abhängigen Ansprüche.

In einem ersten Aspekt ist eine Steuereinrichtung für eine Antriebsvorrichtung vorgesehen. Die Antriebsvorrichtung weist eine Energiespeichereinrichtung und eine Antriebseinheit auf. Die Energiespeichereinrichtung kann als Batterie beziehungsweise Akku ausgestaltet sein. Die Energiespeichereinrichtung kann zum Aufnehmen, beispielsweise Laden, und zum Ausgeben, beispielsweise Entladen, von Energie, beispielsweise elektrischer Energie, ausgestaltet sein. Die Antriebseinheit weist einen Traktionsmotor und einen Arbeitsmotor auf. Die Antriebseinheit kann eine Getriebeeinheit aufweisen. Die Antriebseinheit kann zumindest eine Nebenverbrauchereinrichtung, wie eine Schalteinrichtung für die Getriebeeinheit, eine Bremsvorrichtung, eine Kühleinrichtung oder dergleichen, aufweisen.

Der Traktionsmotor und der Arbeitsmotor sind jeweils über zumindest eines von einem Laden und einem Entladen der Energiespeichereinrichtung betreibbar. Die Steuereinrichtung weist eine Antriebsteuereinheit mit einer Antriebschnittstelle auf, die dazu ausgestaltet ist, zumindest einen Antriebladeparameter und einen Antriebentladeparameter zu empfangen. Die Antriebschnittstelle kann eine Anzahl an elektrischen Kontakten aufweisen. Die Antriebschnittstelle kann als Steckverbindung ausgestaltet sein. Die Antriebsteuereinheit ist dazu ausgestaltet, den Traktionsmotor und den Arbeitsmotor zumindest unter Berücksichtigung des Antriebladeparameters und des Antriebentladeparameters zu steuern. Dadurch kann die Abtriebsvorrichtung mit großer Effizienz und ohne größere Einschränkungen betrieben werden.

Der Traktionsmotor kann als Elektromotor, beispielsweise Synchronmaschine oder Asynchronmaschine ausgestaltet sein. Der Traktionsmotor kann über ein Laden und ein Entladen der Energiespeichereinrichtung betreibbar sein. Der Traktionsmotor kann zum Fortbewegen eine Antriebsmaschine eingerichtet sein. Der Traktionsmotor kann über Energie, beispielsweise elektrische Energie, beispielsweise von der Energiespeichereinrichtung, betreibbar sein. Der Traktionsmotor kann in einem Generatorbetrieb betreibbar sein. Dann kann der Traktionsmotor Energie erzeugen. Die erzeugte Energie kann in der Energiespeichereinrichtung speicherbar sein. Der Traktionsmotor kann ein Antriebselement, beispielsweise eine Antriebswelle, aufweisen. Die Arbeitsmaschine kann als Bau oder Landmaschine, wie ein Radlader, ein Kipper, ein Kran, eine Planierraupe, ein Traktor oder dergleichen, ausgestaltet sein.

Der Arbeitsmotor kann als Elektromotor, beispielsweise Synchronmaschine oder Asynchronmaschine ausgestaltet sein. Der Arbeitsmotor kann über ein Entladen der Energiespeichereinrichtung betreibbar sein. Der Arbeitsmotor kann über Energie, beispielsweise elektrische Energie, beispielswese von der Energiespeichereinrichtung betreibbar sein. Der Arbeitsmotor kann zum Ausführen einer Arbeitsaufgabe, beispielsweise einem Antreiben einer Arbeitseinrichtung, wie einem Zapfwellenantrieb, eingerichtet sein. Der Arbeitsmotor kann zum Heben einer Last oder zum Antreiben eine Fluidpumpe, beispielsweise Ölpumpe, eingerichtet sein. Der Arbeitsmotor kann ein Antriebselement, beispielsweise eine Antriebswelle, aufweisen.

Der Antriebladeparameter und der Antriebentladeparameter kann jeweils einen Wert oder einen Maximalwert, beispielsweise einen Maximalstrom, eine Maximalleistung oder eine Maximalkapazität, beziehungsweise Maxiamalenergiemenge, umfassen, mit der die Antriebseinheit, beispielsweise der Traktionsmotor, die Energiespeichereinrichtung laden beziehungsweise entladen kann. Der Antriebladeparameter kann einen Antriebladestrom umfassen. Der Antriebentladeparameter kann einen Antriebentladestrom umfassen. Die Antriebseinheit, beispielsweise der Traktionsmotor und/oder der Arbeitsmotor, kann über den Antriebentladeparameter antreibbar sein. Die Antriebseinheit, beispielsweise der Traktionsmotor, kann zum Zurückführen, beispielsweise Rekuperieren, von Energie zu der Energiespeichereinrichtung über den Antriebladeparameter eingerichtet sein.

Die Antriebsteuereinheit kann zum Festlegen eines Anteils des Antriebladeparameters beziehungsweise seines Werts eingerichtet sein, mit dem der Traktionsmotor und/oder der Arbeitsmotor antreibbar ist. Die Antriebsteuereinheit kann eine Getriebesteuereinheit aufweisen. Über den Antriebentladeparameter kann ein Antreiben der Antriebseinheit beschränkbar sein, beispielsweise wenn die in der Energiespeichereinrichtung gespeicherte Energie gering ist. Über den Antriebladeparameter kann ein Zurückführen von Energie aus der Antriebseinheit zu der Energiespeichereinrichtung beschränkbar sein, beispielsweise wenn die in der Energiespeichereinrichtung gespeicherte Energie hoch ist. Die Antriebsteuereinheit kann zum Ausgeben eines Steuersignals an den Traktionsmotor und an den Arbeitsmotor eingerichtet sein. Die Antriebsteuereinheit kann zum Aufteilen eines verfügbaren Antriebentladeparameters, beispielsweise eines maximalen Entladestroms, einer maximalen Entladeleistung und einer maximalen Entladekapazität beziehungsweise Entladeenergiemenge, auf den Traktionsmotor und den Arbeitsmotor eingerichtet sein. Die Antriebsteuereinheit kann zum Übermitteln des jeweiligen Anteils des Antriebladeparameters und des Antriebentladeparameters an den Traktionsmotor beziehungsweise einen Traktionsinverter für den Traktionsmotor und den Arbeitsmotor beziehungsweise einen Arbeitsinverter für den Arbeitsmotor eingerichtet sein.

Die Antriebsteuereinheit kann zum Aufteilen des Antriebentladeparameters, beziehungsweise seines Werts unter Berücksichtigung einer Fahrstrategie, beispielsweise unter Berücksichtigung einer Fahrpedalstellung, eingerichtet sein. Bei einer stark betätigten Fahrpedalstellung, beispielsweise einer hohen angeforderten Geschwindigkeit oder Beschleunigung der Arbeitsmaschine, kann die Antriebsteuereinheit dazu eingerichtet sein, dem Traktionsmotor einen größeren Anteil des Antriebentladeparameters zuzuweisen als dem Arbeitsmotor. Dadurch kann, entsprechend einer Fahrstrategie, der Traktionsmotor höher priorisiert sein als der Arbeitsmotor. Dann kann der Traktionsmotor mit einem höheren Strom, einer höheren Leistung, einer größeren Energiemenge oder einer Kombination davon betreibbar sein als der Arbeitsmotor. Bei einer wenig betätigten Farbdarstellung, beispielsweise einer geringen angeforderten Geschwindigkeit oder Beschleunigung der Arbeitsmaschine, kann die Antriebsteuereinheit dazu eingerichtet sein, dem Arbeitsmotor einen größeren Anteil an dem verfügbaren Antriebentladeparameter zuzuweisen als dem Traktionsmotor. Dadurch kann entsprechend einer Fahrstrategie der Arbeitsmotor höher priorisiert sein als der Traktionsmotor. Dann kann der Arbeitsmotor mit einem höheren Strom, einer höheren Leistung, einer größeren Energiemenge oder einer Kombination davon betreibbar sein als der Traktionsmotor.

Der Antriebladeparameter und der Antriebentladeparameter kann in Zusammenhang mit einem Ladeparameter und einem Entladeparameter der Energiespeichereinrichtung stehen. Ein Ladeparameter und ein Entladeparameter kann jeweils einen Maximalwert, beispielsweise einen Maximalstrom, eine Maximalleistung oder eine Maximalkapazität, beziehungsweise Maxiamalenergiemenge, umfassen, mit dem die Energiespeichereinrichtung geladen, beziehungsweise entladen werden kann. Der Ladeparameter kann einen Ladestrom umfassen. Der Entladeparameter kann einen Entladestrom umfassen. Der Antriebladeparameter beziehungsweise der Antriebentladeparameter können von einem Anteil des Ladeparameters beziehungsweise des Entladeparameters gebildet sein. Das Fahrzeug kann eine Fahrzeugsteuereinheit aufweisen. Die Fahrzeugsteuereinheit kann zum Festlegen des Antriebladeparameters und des Antriebentladeparameters beispielsweise basierend auf den Ladeparameter und dem Entladeparameter eingerichtet sein. Das Fahrzeug kann zumindest eine Verbrauchereinrichtung, beispielsweise ein Kühlsystem, ein Ladegerät, Stellmotoren oder sonstige Verbraucher, aufweisen. Wenn Energie, beispielsweise aus der Energiespeichereinrichtung, zum Betreiben einer Verbrauchereinrichtung, wie dem Kühlsystem, benötigt wird, kann die Fahrzeugsteuereinheit dazu eingerichtet sein, den Antriebentladeparameter beziehungsweise seinen Wert zu reduzieren. Damit kann ein Betrieb der Verbrauchereinrichtung sichergestellt werden.

In einer Ausführungsform der Steuereinrichtung kann die Antriebsschnittstelle zum Ausgeben eines Zusatzantriebladeparameters und eines Zusatzantriebentladeparameters ausgestaltet sein, wenn ein Zusatzbedarf für zumindest einen von dem Traktionsmotor und dem Arbeitsmotor erfasst wird.

Die Antriebsteuereinheit kann zum Überprüfen eingerichtet sein, ob der Antriebladeparameter und/oder der Antriebentladeparameter beziehungsweise deren Werte für den Betrieb der Antriebseinheit ausreichend ist. Die Antriebsteuereinheit kann zum Erfassen des Zusatzbedarfs eingerichtet sein. Ist ein Bedarf, beispielsweise ein Strombedarf, ein Leistungsbedarf oder ein Energiebedarf größer als der Wert des Antriebladeparameters beziehungsweise des Antriebentladeparameters, kann die Antriebsteuereinheit zum Erkennen und Ermitteln des Zusatzbedarfs eingerichtet sein. Der Zusatzbedarf kann von einem zusätzlichen Strombedarf, Leistungsbedarf oder Energiebedarf gebildet sein, der über den Wert des Antriebladeparameters beziehungsweise des Antriebentladeparameters hinausgeht. Die Antriebsteuereinheit kann zum Festlegen des Zusatzantriebladeparameters und des Zusatzantriebentladeparameters basierend auf dem Zusatzbedarf eingerichtet sein. Über die Antriebschnittstelle kann der Zusatzantriebladeparameter und der Zusatzantriebentladeparameter an die Fahrzeugsteuereinheit übermittelbar sein. Dadurch kann die Steuereinrichtung für eine Anfrage eines zusätzlichen Stromes, einer zusätzlichen Leistung und/oder einer zusätzlichen Energiemenge für ein Laden beziehungsweise Entladen der Energiespeichereinrichtung zum Betreiben der Antriebseinheit eingerichtet sein.

In einer Ausführungsform der Steuereinrichtung kann die Antriebschnittstelle zum Ausgeben eines Antriebzustandparameters ausgestaltet sein, wenn der Zusatzbedarf erfasst wird.

Die Antriebsteuereinheit kann zum Bestimmen des Antriebzustandparameters ausgestaltet sein. Der Antriebzustandparameter kann eine Information über einen Antriebzustand, beispielsweise eine voraussichtliche Dauer und/oder Ursache des Zusatzbedarfs umfassen. Die Ursache kann eine Überdrehzahl zumindest eines von dem Traktionsmotor und dem Arbeitsmotor umfassen. Bei einer Überdrehzahl beispielsweise des Traktionsmotors kann die Antriebseinheit Energie erzeugen, die der Energiespeichereinrichtung, einem Verbraucher, einem Nebenverbraucher oder dem Arbeitsmotor zugeführt werden kann. Die Ursache kann einen Schaltvorgang, beispielsweise der Getriebeeinheit und damit verbundene Drehzahlanpassungen von Elementen in der Getriebeeinheit, umfassen. Die Ursache kann ein Überschreiten des von der Fahrzeugsteuereinheit festgelegten Antriebladeparameters und/oder Antriebentladeparameters umfassen. Die Dauer kann eine Zeitspanne, beispielweise eine voraussichtliche Zeitspanne, umfassen, für die der Zusatzbedarf vorliegt.

In einer Ausführungsform der Steuereinrichtung kann die Steuereinrichtung ein Batteriemanagementsystem und eine Fahrzeugsteuereinheit aufweisen. Das Batteriemanagementsystem kann dazu ausgestaltet sein, basierend auf einem Zustand der Energiespeichereinrichtung einen Ladeparameter und einen Entladeparameter auszugeben. Die Fahrzeugsteuereinheit kann eine Fahrzeugschnittstelle aufweisen, die für eine Kommunikation mit der Antriebschnittstelle ausgestaltet sein kann. Die Fahrzeugschnittstelle kann als eine zu der Antriebschnittstelle korrespondierende Steckverbindung ausgestaltet sein. Die Fahrzeugsteuereinheit kann dazu ausgestaltet sein, den Antriebladeparameter und den Antriebentladeparameter zumindest unter Berücksichtigung des Ladeparameters und des Entladeparamaters festzulegen.

Das Batteriemanagementsystem kann dazu eingerichtet sein, einen Zustand, beispielsweise zumindest eines von einem Ladezustand, einer Spannung, einem Alter und einem Druck, der Energiespeichereinrichtung zu erfassen. Das Batteriemanagementsystem kann dazu eingerichtet sein, den Ladeparameter und den Entladeparameter festzulegen, beispielsweise unter Berücksichtigung des Zustands der Energiespeichereinrichtung. Das Batteriemanagementsystem kann dazu eingerichtet sein den Ladeparameter und den Entladeparameter für die Energiespeichereinrichtung an die Fahrzeugsteuereinheit zu übermitteln.

Die Fahrzeugsteuereinheit kann zum Auswerten von Antriebladeparameter, Antriebentladeparameter, Zusatzantriebladeparameter, Zusatzantriebentladeparameter und Antriebzustandparameter eingerichtet sein. Die Fahrzeugsteuereinheit kann zum Genehmigen des Zusatzbedarfs eingerichtet sein. Die Fahrzeugsteuereinheit kann zum Anpassen, beispielsweise Anheben oder Reduzieren, des Antriebladeparameters und des Antriebentladeparameters, im Umfang des Zusatzantriebladeparameters und des Zusatzantriebentladeparameters oder Anteilen davon eingerichtet sein. Die Fahrzeugsteuereinheit kann zum Ausgeben eines Feedbacksignals an die Antriebsteuereinheit eingerichtet sein. Das Feedbacksignal kann eine Information darüber enthalten, ob ein angefragter Zusatzbedarf der Antriebsteuereinheit genehmigt wird und optional für welchen Zeitraum oder in welcher Höhe der angefragte Zusatzbedarf genehmigt wird. Die Fahrzeugsteuereinheit kann dazu eingerichtet sein, zumindest einen von dem Antriebladeparameter und dem Antriebentladeparameter für eine bestimmte Zeit gemäß dem Antriebzustandparameter zu erhöhen beziehungsweise zu reduzieren.

Die Fahrzeugschnittstelle kann dazu eingerichtet sein, zumindest einen von dem Antriebladeparameter, dem Antriebentladeparameter und dem Feedbacksignal an die Antriebschnittstelle zu übermitteln. Die Fahrzeugschnittstelle kann dazu eingerichtet sein zumindest einen von dem Zusatzantriebladeparameter, dem Zusatzantriebentladeparameter und dem Antriebzustandparameter von der Antriebschnittstelle zu empfangen.

In einer Ausführungsform der Steuereinrichtung kann die Antriebsvorrichtung eine Verbrauchereinrichtung aufweisen, die über ein Entladen der Energiespeichereinrichtung betreibbar sein kann. Die Fahrzeugsteuereinheit kann dazu ausgestaltet sein, den Antriebladeparameter und den Antriebentladeparameter unter Berücksichtigung des Betriebs der Verbrauchereinrichtung festzulegen.

Die Verbrauchereinrichtung kann über Energie, beispielsweise elektrische Energie, betreibbar sein. Die Verbrauchereinrichtung kann einen Bedarf an Energie aufweisen. Die Verbrauchereinrichtung kann ein Kühlsystem aufweisen. Die Antriebsvorrichtung kann eine Ladeeinrichtung, beispielsweise für die Energiespeichereinrichtung, aufweisen. Die Energie kann von der Energiespeichereinrichtung ausgegeben werden. Die Fahrzeugsteuereinheit kann eine Priorisierung bei der Festlegung der verschiedenen Parameter berücksichtigen. Die Fahrzeugsteuereinheit kann dazu eingerichtet sein, den Antriebentladeparameter bei Auftreten eines Bedarfs durch eine Verbrauchereinrichtung zu reduzieren. Die Fahrzeugsteuereinheit kann dazu eingerichtet sein einen Betrieb zumindest einer der Verbrauchereinrichtungen einzuschränken, um einen erhöhten Antriebentladeparameter, beispielsweise basierend auf dem Zusatzantriebentladeparameter, festzulegen, beispielsweise für eine bestimmte Zeit, beispielsweise gemäß dem Antriebzustandparameter. Die Fahrzeugsteuereinheit kann dazu eingerichtet sein, einen erhöhten Antriebladeparameter festzulegen, beispielsweise während eines Betriebs einer der Verbrauchereinrichtungen. Umgekehrt kann die Fahrzeugsteuereinheit dazu eingerichtet sein zumindest eine der Verbrauchereinrichtungen zu betreiben, um einen erhöhten Antriebladeparameter, beispielsweise basierend auf dem Zusatzantriebladeparameter, festzulegen.

In einer Ausführungsform der Steuereinrichtung kann die Antriebsvorrichtung eine Brennstoffzelleneinrichtung aufweisen, die im Betrieb zum Ausgeben einer Energie eingerichtet ist. Die Fahrzeugsteuereinheit kann dazu ausgestaltet sein, den Antriebladeparameter und den Antriebentladeparameter unter Berücksichtigung des Betriebs der Brennstoffzelleneinrichtung festzulegen.

Über die Brennstoffzelleneinrichtung kann Energie, beispielsweise elektrische Energie, bereitstellbar sein. Die Brennstoffzelleneinrichtung kann zum Speichern von Energie in der Energiespeichereinrichtung eingerichtet sein. Die Brennstoffzelleneinrichtung kann zum Versorgen von zumindest einem der Verbrauchereinrichtungen und der Antriebseinheit mit Energie oder Strom eingerichtet sein. Die Fahrzeugsteuereinheit kann zum Steuern, beispielsweise Betreiben, gedrosselten Betreiben oder Abschalten der Brennstoffzelleneinrichtung eingerichtet sein. Die Fahrzeugsteuereinheit kann zum Festlegen eines erhöhten Antriebladeparameters und gedrosselten Betreiben oder Abschalten der Brennstoffzelleneinrichtung eingerichtet sein. Die Fahrzeugsteuereinheit kann zum Festlegen eines erhöhten Antriebentladeparameters und Betreiben der Brennstoffzelleneinrichtung eingerichtet sein.

In einem zweiten Aspekt ist eine Antriebsvorrichtung mit einer Steuereinrichtung nach einer der vorhergehenden Ausführungsformen vorgesehen. Weitere Merkmale, Wirkungen und Vorteile für den zweiten Aspekt können dem ersten Aspekt entnommen werden. Ferner stellen Merkmale, Wirkungen und Vorteile des zweiten Aspekts auch Merkmale, Wirkungen und Vorteile für den ersten Aspekt dar. Die Antriebsvorrichtung weist eine Energiespeichereinrichtung und eine Antriebseinheit mit einem Traktionsmotor und einem Arbeitsmotor auf. Der Traktionsmotor und der Arbeitsmotor sind jeweils über zumindest eines von einem Laden und einem Entladen der Energiespeichereinrichtung über die Steuereinrichtung betreibbar. Die Antriebsvorrichtung, die die Steuereinrichtung mit der Antriebschnittstelle aufweist, ist auf einfache Weise in eine Arbeitsmaschine integrierbar. Weitere Details der Komponenten können der vorhergehenden Beschreibung entnommen werden.

In einer Ausführungsform der Antriebsvorrichtung kann die Antriebsvorrichtung zumindest eines von einer Verbrauchereinrichtung und einer Brennstoffzelleneinrichtung aufweisen. Die Verbrauchereinrichtung kann über ein Entladen der Energiespeichereinrichtung betreibbar sein. Die Brennstoffzelleneinrichtung kann im Betrieb zum Ausgeben einer Energie eingerichtet sein. Weitere Details der Komponenten können der vorhergehenden Beschreibung entnommen werden.

In einem dritten Aspekt ist ein Verfahren zum Steuern einer Antriebsvorrichtung nach einer der vorhergehenden Ausführungsformen vorgesehen. Weitere Merkmale, Wirkungen und Vorteile für den dritten Aspekt können dem zweiten Aspekt entnommen werden. Ferner stellen Merkmale, Wirkungen und Vorteile des dritten Aspekts auch Merkmale, Wirkungen und Vorteile für den zweiten Aspekt dar. Das Verfahren umfasst in einem ersten Schritt ein Empfangen zumindest eines von dem Antriebladeparameter und dem Antriebentladeparameter der Fahrzeugsteuereinheit durch die Antriebsteuereinheit. Das Verfahren umfasst in einem zweiten Schritt ein Betreiben zumindest eines von dem Traktionsmotor und dem Arbeitsmotor durch die Antriebsteuereinheit basierend auf zumindest einem von dem Antriebladeparameter und dem Antriebentladeparameter.

Das Verfahren kann ein Festlegen zumindest eines von einem Antriebladeparameter und einem Antriebentladeparameter durch die Fahrzeugsteuereinheit, beispielsweise unter Berücksichtigung des Betriebs zumindest eines von der Verbrauchereinrichtung und der Brennstoffzelleneinrichtung umfassen. Das Verfahren kann ein Überprüfen durch die Antriebsteuereinheit umfassen, ob ein Zusatzbedarf der Antriebseinheit vorhanden ist, beziehungsweise ob der Antriebladeparameter beziehungsweise der Antriebentladeparameter beziehungsweise deren Werte für den Betrieb der Antriebseinheit ausreichend ist. Das Verfahren kann ein Bestimmen zumindest eines von dem Zusatzantriebladeparameter, dem Zusatzantriebentladeparameter und dem Antriebzustandparameter durch die Antriebsteuereinheit umfassen. Das Verfahren kann ein Übermitteln zumindest eines von dem Zusatzantriebladeparameter, dem Zusatzantriebentladeparameter und dem Antriebzustandparameter an die Fahrzeugsteuereinheit durch die Antriebsteuereinheit umfassen. Das Verfahren kann ein Anpassen des Antriebladeparameters und des Antriebentladeparameters durch die Fahrzeugsteuereinheit basierend auf zumindest einem von dem von dem Zusatzantriebladeparameter, dem Zusatzantriebentladeparameter und dem Antriebzustandparameter umfassen. Das Verfahren kann ein reduziertes Betreiben zumindest eines von dem Traktionsmotor und dem Arbeitsmotor durch die Antriebsteuereinheit umfassen.

In einem vierten Aspekt ist eine Arbeitsmaschine mit einer Antriebsvorrichtung nach einer der vorhergehenden Ausführungsformen vorgesehen. Weitere Merkmale, Wirkungen und Vorteile für den vierten Aspekt können dem dritten Aspekt entnommen werden. Ferner stellen Merkmale, Wirkungen und Vorteile des vierten Aspekts auch Merkmale, Wirkungen und Vorteile für den dritten Aspekt dar. Die Antriebsvorrichtung weist ferner eine Arbeitseinrichtung und zumindest ein Traktionselement auf. Die Antriebsvorrichtung kann zwei Traktionselemente aufweisen. Die Arbeitseinrichtung ist zum Verrichten einer Arbeitsaufgabe der Arbeitsmaschine über den Arbeitsmotor eingerichtet. Das Traktionselement ist zum Fortbewegen der Arbeitsmaschine über den Traktionsmotor antreibbar.

Die Arbeitsmaschine kann eine Nutzerschnittstelle aufweisen. Die Nutzerschnittstelle kann ein Fahrpedal aufweisen. Der Nutzer kann das Fahrpedal in verschiedene Stellungen bringen. Über die Fahrpedalstellung kann der Nutzer zumindest eines von einer Geschwindigkeit und einer Beschleunigung bei der Fahrzeugsteuereinheit anfordern.

Ein Traktionselement kann als Rad, beispielswese Antriebsrad, oder Kettenlaufwerk ausgebildet sein. Das Traktionselement kann mechanisch mit dem Antriebselement des Traktionsmotors zum Fortbewegen der Arbeitsmaschine wirkverbunden sein. Über Gelenkwellen zwischen dem Traktionselement und dem Antriebselement des Traktionsmotors kann ein Lenkwinkel oder Federweg bereitstellbar sein. Die Arbeitsmaschine kann eine Arbeitseinrichtung, beispielsweise eine Hubeinrichtung, einen Zapfwellenantrieb oder dergleichen, aufweisen. Die Arbeitseinrichtung kann zum Ausführen einer Arbeitsaufgabe, beispielsweise dem Heben einer Last, eingerichtet sein.

Sind zwei Elemente mechanisch wirkverbunden, so sind diese unmittelbar oder mittelbar derart miteinander gekoppelt, dass eine Bewegung des einen Elements eine Reaktion des anderen Elements bewirkt. Beispielsweise kann eine mechanische Wirkverbindung durch eine formschlüssige oder reibschlüssige Verbindung bereitgestellt werden. Die mechanische Wirkverbindung kann einem Kämmen von korrespondierenden Verzahnungen der zwei Elemente entsprechen. Zwischen den Elementen können dabei weitere Elemente, beispielsweise eine oder mehrere Stirnradstufen, vorgesehen sein. Unter einer permanent drehfesten Verbindung zweier Elemente wird hingegen eine Verbindung verstanden, bei welcher die beiden Elemente zu allen bestimmungsgemäßen Zuständen des Getriebes starr miteinander gekoppelt sind. Die Elemente können dabei als drehfest miteinander verbundene Einzelkomponenten oder auch einstückig vorliegen. Über ein Schaltelement, beispielsweise eine Kupplung oder Bremse, kann hingegen eine drehfeste Verbindung zwischen zwei Elementen selektiv hergestellt oder aufgelöst werden.

### Kurze Beschreibung der Figuren

Figur 1 zeigt eine Prinzipdarstellung einer Ausführungsform einer Steuereinrichtung für eine Antriebsvorrichtung für eine Arbeitsmaschine.
Figur 2 zeigt eine Prinzipdarstellung einer Ausführungsform der Antriebsvorrichtung.
Figur 3 zeigt eine Flussdiagramm einer Ausführungsform eines Verfahrens zum Steuern der Antriebsvorrichtung.
Figur 4 zeigt eine Draufsicht einer Prinzipdarstellung einer Ausführungsform der Arbeitsmaschine mit der Antriebsvorrichtung.

### Detaillierte Beschreibung von Ausführungsformen

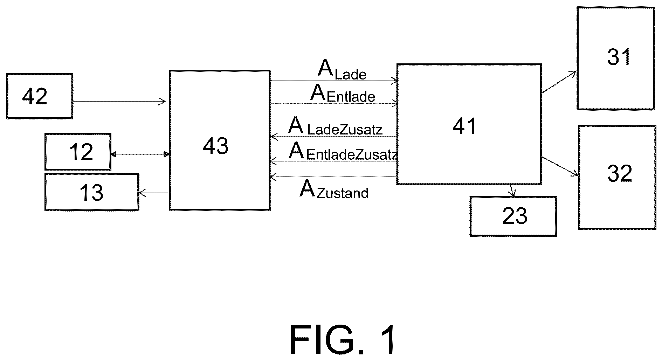

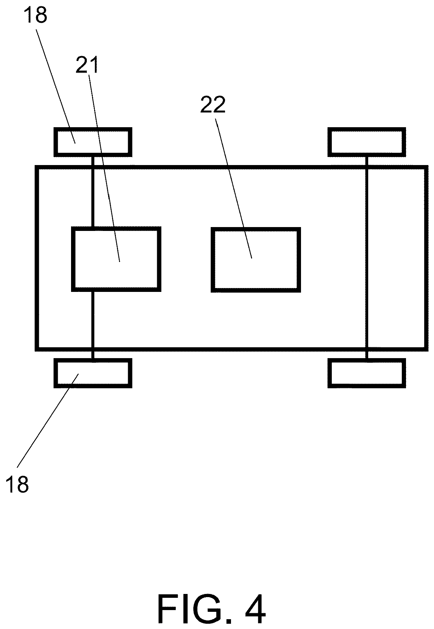

Figur 1 zeigt eine Prinzipdarstellung einer Ausführungsform einer Steuereinrichtung für eine Antriebsvorrichtung für eine Arbeitsmaschine. Die Antriebsvorrichtung weist eine Energiespeichereinrichtung 11, vorliegend eine Batterie, und eine Antriebseinheit mit dem Traktionsmotor 21 und einem Arbeitsmotor 22 auf, die mit Bezug auf Figur 4 genauer beschrieben sind. Antriebseinheit weist ferner eine Nebenverbrauchereinrichtung 23 auf. Die Antriebsvorrichtung weist ferner einen Laderegler 12 einer Ladeeinrichtung und eine Verbrauchereinrichtung 13, vorliegend ein Kühlsystem, auf. Die Verbrauchereinrichtung 13, die Nebenverbrauchereinrichtung 23, der Traktionsmotor 21 und der Arbeitsmotor 22 sind über Energie aus der Energiespeichereinrichtung 11 betreibbar. Über den Laderegler 12 kann die Energiespeichereinrichtung 11 geladen beziehungsweise entladen werden.

Die Steuereinrichtung weist eine Antriebsteuereinheit 41, ein Batteriemanagementsystem 42 und eine Fahrzeugsteuereinheit 43 auf. Die Antriebsteuereinheit 41 weist eine Antriebschnittstelle auf, die dazu ausgestaltet ist, einen Antriebladeparameter A_{Lade}, vorliegend einen maximal zulässigen Antriebladestrom, und einen Antriebentladeparameter A_{Entlade}, vorliegend einen maximal zulässigen Antriebentladestrom, zu empfangen. Ferner ist die Antriebschnittstelle dazu ausgestaltet, einen Zusatzantriebladeparameter A_{LadeZusatz}, einen Zusatzantriebentladeparameter A_{EntladeZusatz} und einen Antriebzustandparameter A_{Zustand} auszugeben. Die Antriebsteuereinheit 41 ist dazu ausgestaltet, den Traktionsmotor 21 und den Arbeitsmotor 22 unter Berücksichtigung des Antriebladeparameters und des Antriebentladeparameters zu steuern. Außerdem ist die Antriebseinheit dazu ausgestaltet, die Nebenverbrauchereinrichtung 23 unter Berücksichtigung des Antriebladeparameters A_{Lade} und des Antriebentladeparameters A_{Entlade} zu steuern. Mit anderen Worten ist die Antriebsteuereinheit 41 dazu ausgestaltet, den Antriebladeparameter A_{Lade} und den Antriebentladeparameter A_{Entlade} auf die Komponenten der Antriebseinheit aufzuteilen. Dadurch ist die Antriebsvorrichtung effizient steuerbar und vielseitig einsetzbar.

Das Batteriemanagementsystem 42 erfasst einen Zustand, vorliegend einen Ladezustand, der Energiespeichereinrichtung 11. Basierend auf dem Ladezustand ermittelt das Batteriemanagementsystem 42 einen Ladeparameter, vorliegend einen maximalen Ladestrom, und einen Entladeparameter, vorliegend einen maximalen Entladestrom. Das Batteriemanagementsystem 42 übergibt den Ladeparameter und den Entladeparameter an die Fahrzeugsteuereinheit 43.

Die Fahrzeugsteuereinheit 43 erfasst einen Bedarf, vorliegend einen Strombedarf, der Verbrauchereinrichtung 13. Basierend auf dem Bedarf der Verbrauchereinrichtung 13 legt die Fahrzeugsteuereinheit 43 den Antriebladeparameter A_{Lade} und den Antriebentladeparameter A_{Entlade} fest und übergibt diese Parameter über eine Fahrzeugschnittstelle an die Antriebschnittstelle der Antriebsteuereinheit 41. Der Antriebladeparameter A_{Lade} wird von einem Antriebladestrom zum Laden der Energiespeichereinrichtung 11 gebildet. Der Antriebentladeparameter A_{Entlade} wird von einem Antriebentladestrom zum Antreiben des Traktionsmotor 21, des Arbeitsmotors 22 und der Nebenverbrauchereinrichtung 23 gebildet. Ein Traktionsinverter 31 regelt die Stromzufuhr zu dem Traktionsmotor 21. Ein Arbeitsinverter 32 regelt die Stromzufuhr zu dem Arbeitsmotor 22.

Die Antriebsteuereinheit 41 steuert den Betrieb des Traktionsmotors 21, des Arbeitsmotors 22 und der Nebenverbrauchereinrichtung 23. Dazu verteilt die Antriebsteuereinheit 41 den Wert, vorliegend den verfügbaren Lade- beziehungsweise Entladestrom, des Antriebladeparameters A_{Lade} und des Antriebentladeparameters A_{Entlade} auf den Traktionsmotor 21, den Arbeitsmotor 22 und die Nebenverbrauchereinrichtung 23. Mit anderen Worten verteilt die Antriebsteuereinheit 41 den verfügbaren Lade- beziehungsweise Entladestrom auf den Traktionsmotor 21, den Arbeitsmotor 22 und die Nebenverbrauchereinrichtung 23. Dazu ist die Antriebsteuereinheit 41 zum Übertragen von Signalen mit dem Traktionsinverter 31 und dem Arbeitsinverter 32 verbunden.

Die Antriebsteuereinheit 41 stellt einen Zusatzbedarf für die Antriebseinheit fest, wenn die Summe der Lade- beziehungsweise Entladeströme von Traktionsmotor 21, Arbeitsmotor 22 und Nebenverbrauchereinrichtung 23 höher ist als der Wert des Antriebladeparameters A_{Lade} und des Antriebentladeparameters A_{Entlade}. Dann bestimmt die Antriebsteuereinheit 41 entsprechend einen Zusatzantriebladeparameter A_{LadeZusatz} und einen Zusatzantriebentladeparameter A_{EntladeZusatz}. Außerdem bestimmt die Antriebsteuereinheit 41 einen Antriebzustandparameter A_{Zustand}. Der Antriebzustandparameter A_{Zustand} beinhaltet Informationen über den Grund und die Dauer des Zusatzbedarfs. Die Antriebsteuereinheit 41 übergibt den Zusatzantriebladeparameter A_{LadeZusatz}, den Zusatzantriebentladeparameter A_{EntladeZusatz} und den Antriebzustandparameter A_{Zustand} an die Fahrzeugsteuereinheit 43. Die Fahrzeugsteuereinheit 43 entscheidet, ob der Zusatzantriebladeparameter A_{LadeZusatz} und der Zusatzantriebentladeparameter A_{EntladeZusatz} genehmigt wird und erhöht gegebenenfalls zumindest einen von dem Antriebladeparameter A_{Lade} und dem Antriebentladeparameter A_{Entlade} um den Wert des Zusatzantriebladeparameters A_{LadeZusatz} beziehungsweise des Zusatzantriebentladeparameters A_{EntladeZusatz}. In einer weiteren Ausführungsform übergibt die Fahrzeugsteuereinheit 43 ein Feedbacksignal an die Antriebsteuereinheit 41 mit Informationen darüber, ob und wie lange der Zusatzbedarf genehmigt wird.

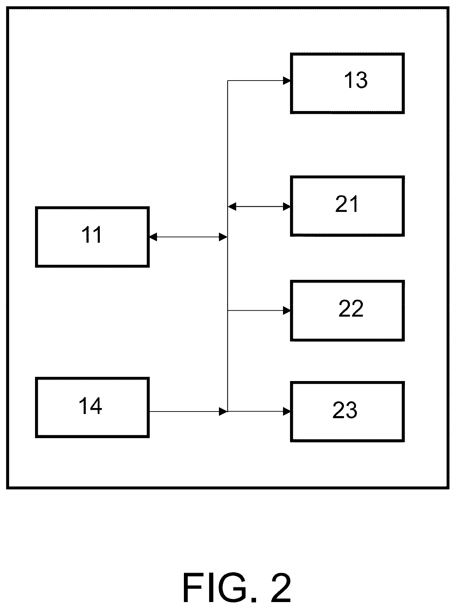

Figur 2 zeigt eine Prinzipdarstellung einer Ausführungsform der Antriebsvorrichtung. In Figur 2 sind Energieflüsse dargestellt. In der vorliegenden Ausführungsform weist die Antriebsvorrichtung eine Brennstoffzelleneinrichtung 14 auf. Die Energiespeichereinrichtung 11 kann Energie beziehungsweise Strom abgeben und aufnehmen. Die Brennstoffzelleneinrichtung 14 kann Energie beziehungsweise Strom abgeben. Die abgegebene Energie beziehungsweise der abgegebene Strom kann von zumindest einem von der Verbrauchereinrichtung 13, dem Traktionsmotor 21, dem Arbeitsmotor 22 und der Nebenverbrauchereinrichtung 23 für ein Betreiben derselben aufgenommen werden. Der Traktionsmotor 21 kann Energie beziehungsweise Strom durch Rekuperation erzeugen und abgeben.

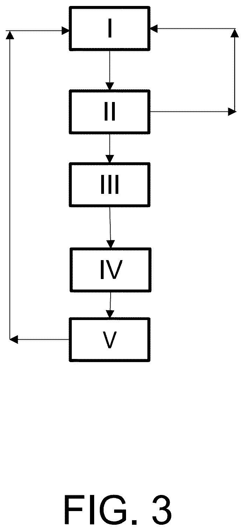

Figur 3 zeigt eine Flussdiagramm einer Ausführungsform eines Verfahrens zum Steuern der Antriebsvorrichtung. In einem ersten Schritt umfasst das Verfahren ein Empfangen zumindest eines von dem Antriebladeparameter A_{Lade} und dem Antriebentladeparameter A_{Entlade} der Fahrzeugsteuereinheit 43 durch die Antriebsteuereinheit 41. In einem zweiten Schritt umfasst das Verfahren ein Betreiben zumindest eines von dem Traktionsmotor 21 und dem Arbeitsmotor 22 durch die Antriebsteuereinheit 41 basierend auf zumindest einem von dem Antriebladeparameter A_{Lade} und dem Antriebentladeparameter A_{Entlade}.

In einem dritten Schritt umfasst das Verfahren ein Überprüfen der Antriebsteuereinheit 41, ob ein Zusatzbedarf der Antriebseinheit vorhanden ist. In einem vierten Schritt umfasst das Verfahren ein Bestimmen zumindest eines von dem Zusatzantriebladeparameter A_{LadeZusatz}, dem Zusatzantriebentladeparameter A_{EntladeZusatz} und dem Antriebzustandparameter A_{Zustand} durch die Antriebsteuereinheit 41. In einem fünften Schritt umfasst das Verfahren ein Übermitteln zumindest eines von dem Zusatzantriebladeparameter A_{LadeZusatz}, dem Zusatzantriebentladeparameter A_{EntladeZusatz} und dem Antriebzustandparameter A_{Zustand} an die Fahrzeugsteuereinheit 43 durch die Antriebsteuereinheit 41. Dann fährt das Verfahren weiter mit dem ersten Schritt und dem zweiten Schritt, wobei zumindest einer von dem Traktionsmotor 21 und dem Arbeitsmotor 22 durch die Antriebsteuereinheit 41 gegebenenfalls mit dem von der Fahrzeugsteuereinheit 43 angepassten Antriebladeparameter A_{Lade} und dem Antriebentladeparameter A_{Entlade} betrieben wird.

Figur 4 zeigt eine Draufsicht einer Prinzipdarstellung einer Ausführungsform der Arbeitsmaschine mit der Antriebsvorrichtung. Die Antriebsvorrichtung weist alle Merkmale einer der vorhergehenden Ausführungsformen auf. In Figur 4 sind der Traktionsmotor 21 und der Arbeitsmotor 22 schematisch dargestellt, die jeweils als Elektromotoren ausgestaltet sind. Der Traktionsmotor 21 ist zum Fortbewegen der Antriebsmaschine mechanisch mit zwei an entgegengesetzten Seiten der Arbeitsmaschine angeordneten Traktionselementen 18, vorliegend Antriebsrädern, wirkverbunden. Der Arbeitsmotor 22 ist zum Ausführen einer Arbeitsaufgabe mechanisch mit einer Arbeitseinrichtung, vorliegend einem Zapfwellenantrieb, wirkverbunden.

### Bezugszeichen

- 11: Energiespeichereinrichtung
- 12: Laderegler
- 13: Verbrauchereinrichtung
- 14: Brennstoffzelleneinrichtung
- 18: Traktionselement
- 21: Traktionsmotor
- 22: Arbeitsmotor
- 23: Nebenverbrauchereinrichtung
- 31: Traktionsinverter
- 32: Arbeitsinverter
- 41: Antriebsteuereinheit
- 42: Batteriemanagementsystem
- 43: Fahrzeugsteuereinheit
- A_{Lade}: Antriebladeparameter
- A_{Entlade}: Antriebentladeparameter
- A_{LadeZusatz}: Zusatzantriebladeparameter
- A_{EntladeZusatz}: Zusatzantriebentladeparameter
- A_{Zustand}: Antriebzustandparameter

## Patentansprüche

1. Steuereinrichtung für eine Antriebsvorrichtung mit einer Energiespeichereinrichtung (11) und einer Antriebseinheit, die einen Traktionsmotor (21) und einen Arbeitsmotor (22) aufweist, wobei der Traktionsmotor (21) und der Arbeitsmotor (22) jeweils über zumindest eines von einem Laden und einem Entladen der Energiespeichereinrichtung (11) betreibbar sind,
wobei die Steuereinrichtung eine Antriebsteuereinheit (41) mit einer Antriebschnittstelle aufweist, die dazu ausgestaltet ist, zumindest einen Antriebladeparameter (A_{Lade}) und einen Antriebentladeparameter (A_{Entlade}) zu empfangen, und
die Antriebsteuereinheit (41) dazu ausgestaltet ist, den Traktionsmotor (21) und den Arbeitsmotor (22) zumindest unter Berücksichtigung des Antriebladeparameters (A_{Lade}) und des Antriebentladeparameters (A_{Entlade}) zu steuern.

2. Steuereinrichtung nach Anspruch 1, **dadurch gekennzeichnet, dass** die Antriebschnittstelle zum Ausgeben eines Zusatzantriebladeparameters (A_{LadeZusatz}) und eines Zusatzantriebentladeparameters (A_{EntladeZusatz}) ausgestaltet ist, wenn ein Zusatzbedarf für zumindest einen von dem Traktionsmotor (21) und dem Arbeitsmotor (22) erfasst wird.

3. Steuereinrichtung nach Anspruch 2, **dadurch gekennzeichnet, dass** die Antriebschnittstelle zum Ausgeben eines Antriebzustandparameters (A_{Zustand}) ausgestaltet ist, wenn der Zusatzbedarf erfasst wird.

4. Steuereinrichtung nach einem der vorhergehenden Ansprüche, **dadurch gekennzeichnet, dass** die Steuereinrichtung aufweist:
ein Batteriemanagementsystem (42) das dazu ausgestaltet ist, basierend auf einem Zustand der Energiespeichereinrichtung (11) einen Ladeparameter und einen Entladeparameter auszugeben, und
eine Fahrzeugsteuereinheit (43) mit einer Fahrzeugschnittstelle, die für eine Kommunikation mit der Antriebschnittstelle ausgestaltet ist,
wobei die Fahrzeugsteuereinheit (43) dazu ausgestaltet ist, den Antriebladeparameter (A_{Lade}) und den Antriebentladeparameter (A_{Entlade}) zumindest unter Berücksichtigung des Ladeparameters und des Entladeparamaters festzulegen.

5. Steuereinrichtung nach Anspruch 4, **dadurch gekennzeichnet, dass**
die Antriebsvorrichtung eine Verbrauchereinrichtung (13) aufweist, die über ein Entladen der Energiespeichereinrichtung (11) betreibbar ist, und
die Fahrzeugsteuereinheit (43) dazu ausgestaltet ist, den Antriebladeparameter (A_{Lade}) und den Antriebentladeparameter (A_{Entlade}) unter Berücksichtigung des Betriebs der Verbrauchereinrichtung (13) festzulegen.

6. Steuereinrichtung nach einem der Ansprüche 4 und 5, **dadurch gekennzeichnet, dass**
die Antriebsvorrichtung eine Brennstoffzelleneinrichtung (14) aufweist, die im Betrieb zum Ausgeben einer Energie eingerichtet ist, und
die Fahrzeugsteuereinheit (43) dazu ausgestaltet ist, den Antriebladeparameter (A_{Lade}) und den Antriebentladeparameter (A_{Entlade}) unter Berücksichtigung des Betriebs der Brennstoffzelleneinrichtung (14) festzulegen.

7. Antriebsvorrichtung mit einer Steuereinrichtung nach einem der Ansprüche 1-6, einer Energiespeichereinrichtung (11) und einer Antriebseinheit, die einen Traktionsmotor (21) und einen Arbeitsmotor (22) aufweist, wobei der Traktionsmotor (21) und der Arbeitsmotor (22) jeweils über zumindest eines von einem Laden und einem Entladen der Energiespeichereinrichtung (11) über die Steuereinrichtung betreibbar sind.

8. Antriebsvorrichtung nach Anspruch 7, **dadurch gekennzeichnet, dass**
die Antriebsvorrichtung zumindest eines von einer Verbrauchereinrichtung (13) und einer Brennstoffzelleneinrichtung (14) aufweist, wobei
die Verbrauchereinrichtung (13) über ein Entladen der Energiespeichereinrichtung (11) betreibbar ist, und
die Brennstoffzelleneinrichtung (14) im Betrieb zum Ausgeben einer Energie eingerichtet ist.

9. Verfahren zum Steuern einer Antriebsvorrichtung nach einem der Ansprüche 7 oder 8, wobei das Verfahren umfasst:
Empfangen (I) zumindest eines von einem Antriebladeparameter (A_{Lade}) und einem Antriebentladeparameter (A_{Entlade}) der Fahrzeugsteuereinheit (43) durch die Antriebsteuereinheit (41), und
Betreiben (II) zumindest eines von einem Traktionsmotor (21) und einem Arbeitsmotor (22) durch die Antriebsteuereinheit (41) basierend auf zumindest einem von dem Antriebladeparameter (A_{Lade}) und dem Antriebentladeparameter (A_{Entlade}).

10. Arbeitsmaschine mit einer Antriebsvorrichtung nach einem der Ansprüche 7 oder 8, einer Arbeitseinrichtung und einem Traktionselement (18), wobei
die Arbeitseinrichtung zum Verrichten einer Arbeitsaufgabe der Arbeitsmaschine über den Arbeitsmotor (22) eingerichtet ist,
und das Traktionselement (18) zum Fortbewegen der Arbeitsmaschine über den Traktionsmotor (21) antreibbar ist.
